# EUROPEAN PATENT SPECIFICATION

(11) **EP 0 378 397 B1**
(45) Date of publication and mention of the grant of the patent: **05.07.1995**
(21) Application number: 90300289.7
(22) Date of filing: 10.01.1990
(51) Int. Cl.: B62M 23/02, B62M 7/02

(54) **Power transmission**
Kraftübertragung
Transmission de force

(30) Priority: 11.01.1989 IE 6989
(43) Date of publication of application: 18.07.1990
(73) Proprietor: WINGOOD HOLDING COMPANY LIMITED, Dun Laoghaire County Dublin (IE)
(72) Inventor: Goodwin, George, Sandycove County Dublin (IE)
(74) Representative: Casey, Lindsay Joseph

(56) References cited:
- EP-A- 0 219 373
- FR-A- 1 573 163
- FR-A- 2 377 318
- FR-A- 2 439 128
- US-A- 4 397 369

## Description

This invention relates to a power transmission. In particular, it relates to a power transmission for use in transmitting power from a prime mover to a vehicle or other mechanical appliance. More particularly, it relates to a power transmission for use in transmitting power from an internal combustion engine to a bicycle, tricycle or other individual transportation means as well as lawnmowers and the like.

A standard simple bicycle has only one fixed gear ratio. One large crank-wheel in front drives a smaller cog wheel attached to the rear roadwheel. The ratio, or difference in circumference, between the front crankwheel and the rear cogwheel determines the number of revolutions achieved by the rear road wheel in relation to the revolutions of the crank wheel. The specification of an average single-gear bike allows for a reasonable speed to be achieved by an average rider, over level ground. However, when a steep gradient is encountered, the rider of the single gear bike has to dismount and push the machine until level ground is reached.

More sophisticated bicycles are fitted with from four to as many as fifteen speed gear trains. On the "A.T." or "Mountain" bike, fifteen speed gear trains are quite common. This selection of gears enables the rider to cycle up virtually any gradient and to cope with heavy winds, etc., without dismounting. However, no matter how the bicycle has improved in design, the machine and rider can only make the journey if the rider has enough energy to spare above that which is required to perform adequately, at whatever task, when he or she arrives at their destination, be it college, work or some leisure activity. For instance, a young student may have to cycle five or six miles to school, be attentive all day and then cycle home and get down to homework. Such a student suffers a disadvantage that the student living more conveniently to the school does not. In bad weather, particularly, this situation could result in a drop in performance. In the case of someone working, the consequences could be worse.

For most people there are no terrors in riding a bicycle. The main consideration with regard to a proposed journey are - length of journey, terrain to be travelled over and energy.

One solution to these problems is to fit an engine of some kind to the bicycle. In fitting an engine to a bicycle the main problem to be solved is that of reducing the speed of the engine to a suitable speed for driving the wheels. The conventional approach to this problem is to have a friction or geared drive direct to the outer diameter of one of the road wheels of the bicycle. The drive wheel from the engine is of a very small diameter and this, combined with the very large diameter of the road wheel of the cycle, gives an effective speed reduction. A disadvantage of this system is that it does not allow for the use of different gears and so the engine is usually not operating at the best part of its torque/speed characteristic. This results in poor acceleration combined with low top speed. It is only in the mid-range that the system works any way effectively. For this reason systems of this kind have not been particularly successful.

In U.S. Patent Specification No. US-A-4397369 to Read, there is disclosed a power transmission for a bicycle. In Read, the engine speed is reduced through a series of chains and sprockets and drive direct to a sprocket wheel mounted on the pedal crank. The normal chain drive and derailleur system is used to provide the necessary gearing to give effective performance. However, there are a number of disadvantages in the system disclosed by Read.

Read discloses the use of a chain saw motor to drive a bicycle. The bar from the chainsaw is removed and the centrifugal clutch of the chainsaw motor is rendered ineffective. A reduction gearing from the chainsaw drive sprocket to a larger sprocket is provided leading to a belt drive incorporating a further speed reduction combined with a friction clutch, and thence to an output sprocket which is connected by a chain to the outer sprocket of the pedal crank shaft. This then drives the bicycle through the conventional chain and derailleur system.

Read uses a chainsaw engine which, being relatively large, is also relatively wide and requires considerable force to start. While chainsaw engines are started with the pullcord start, these generally require a considerable amount of force, so it is clear from Read that it would be dangerous to try to start the engine while riding the bicycle, as one would easily overbalance due to the enormous force required to be exerted by one hand while steering the bicycle. It can be seen from Read that the chainsaw engine is quite large and quite wide and therefore the knees have to be kept far apart when riding the bicycle which further effects the rider's comfort and balance.

Because it is not possible to start the chainsaw engine from the pullcord while in motion, Read finds it necessary to provide a clutch. The clutch is provided with a belt having a tensioning device which causes the belt to grip a large pulley or to slide loosely through diametrically opposite grooves of the pulley. By engaging this clutch manually while in motion, it is possible to use the momentum of the bicycle or the power being imparted to the pedals by the cyclist to transmit power back through the drive train so as to start the motor. In order that this should be possible, it was found necessary by Read, as indicated above, to block the centrifugal clutch of the chainsaw in the permanently engaged position. It will be appreciated that a centrifugal clutch is a device which only operates in one direction. The centre shaft causes weights to swing outwards when the shaft accelerates so as to grip the outer drum. No matter how fast the outer drum is rotated, if the centre shaft is not being rotated there will be no grip because there is no centrifugal force.

Another disadvantage of the Read invention is in relation to riding the bicycle while the engine is not functioning resulting from insufficient fuel or an engine malfunction. In that event Read disengages the manual clutch which reduces the belt tension around the large pulley. However there will always be some friction due to the belt slipping around the pulley. If a powered cycle is to be effective at all, it must be possible to cycle it with the minimum of friction in the case where the engine is not functioning.

In general, the Read design is cumbersome, inefficient and very expensive to manufacture and assemble. It is also very difficult to fit to a bicycle involving a large number of components which would have to be fitted. It would also be very difficult to remove it from the bicycle.

In French Patent Specification No FR-A-2,377,318, there is disclosed a transmission for a bicycle with auxiliary motor. The motor has an output shaft which is directly connected to the input side of the bicycle. A freewheel means is provided so that when the engine is in use, the pedals do not rotate. However, upon rotation of the pedals, the freewheel means engages to enable the engine to be started.

GB-1,074,431 discloses a power assisted drive means for two-wheeled pedal cycle vehicles having those features defined in the preamble of claim 1. The drive means comprises a power unit which drives a sprocket, equipped with a freewheel, mounted on a rear wheel. In this arrangement the motor drives the rear wheel directly and thus the disclosed power assisted drive means has the significant disadvantage that it cannot be fitted to the rear wheel of a conventional pedal cycle.

Generally, it is an aim of of the present invention to overcome the above clarified problems.

The invention, therefore, provides a power transmission for coupling a prime mover having an output shaft to an input side of a vehicle having a driven wheel and which is selectively pedal-powered, said vehicle also having an output side, which power transmission comprises a clutch means having a clutch input side and a clutch output side; a gear train having a gear train input side and a gear train output side; means for connecting the output shaft to the clutch input side; means for connecting the clutch output side to the gear train input side; means for connecting the gear train output side to the input side of the vehicle; characterised in that a first freewheel means is interposed between the gear train output side and the input side of the vehicle, so that there is unidirectional transmission of power from the prime mover to the vehicle, the input side of the vehicle comprises a pedal crankshaft having a second freewheel means mounted thereon and a first and a second sprocket wheel mounted co-axially on the second freewheel means, and the output side of the first freewheel means is connectable to said second sprocket wheel and the first sprocket wheel is connectable to a wheel of the vehicle.

The gear train preferably comprises a first toothed wheel adapted for connection to the clutch output side; a second toothed wheel and a third toothed wheel arranged coaxially and adapted for rotation in unison; a fourth and fifth toothed wheel arranged coaxially and adapted for rotation in unison; and a sixth toothed wheel; and wherein said first wheel is adapted to drive said second wheel; said third and fourth wheels are adapted for meshing engagement with each other; said fifth and sixth wheels are adapted for meshing engagement with each other; and said sixth wheel is mounted on an output shaft which constitutes the output side of the gear train; and wherein the gear ratio between the first and second wheels is in the range 1:1.5 to 1:3.5; the gear ratio between the third and fourth wheels is in the range 1:1.5 to 1:3.5; and the gear ratio between the fifth and sixth wheels is in the ratio 1:1.5 to 1:3.5.

Preferably, the first wheel and the second wheel are interconnected by a chain means.

Preferably, the first freewheel means has a seventh wheel mounted thereon.

According to a further aspect of the invention there is provided a bicycle which comprises a frame supporting a front wheel; a rear wheel; a crankshaft; a prime mover; and a power transmission according to the invention; and wherein the rear wheel is driveable via a chain connected to the first sprocket wheel; said first sprocket wheel being mounted coaxially with the second sprocket wheel on a common freewheel mounted on the crankshaft rotatable by pedals; the second sprocket wheel being connected to the first freewheel means so that, in use, the prime mover drives the rear wheel of the bicycle via the gear train and the first freewheel means.

Preferably, the gear train comprises a first toothed wheel; a second toothed wheel and a third toothed wheel arranged coaxially and adapted for rotation in unison; a fourth, fifth and sixth toothed wheel; and wherein said first wheel is adapted to be driven by the prime mover and adapted to drive said second wheel; and said sixth wheel is mounted on an output shaft which constitutes the output side of gear train and is connectable to the input side of the vehicle; characterised in that said fourth and fifth toothed wheels are arranged coaxially and adapted for rotation in unison; said third and fourth and fifth and sixth wheels, respectively, being adapted for meshing engagement with each other, and in that the first freewheel means is mounted on the output shaft for enabling unidirectional transmission of power from the prime mover to the vehicle.

The invention will be understood in greater detail from the following description of preferred embodiments thereof given by way of example only and with reference to the accompanying drawings in which:-
Figure 1 is an elevation of a gear train for use with a power transmission according to the invention;

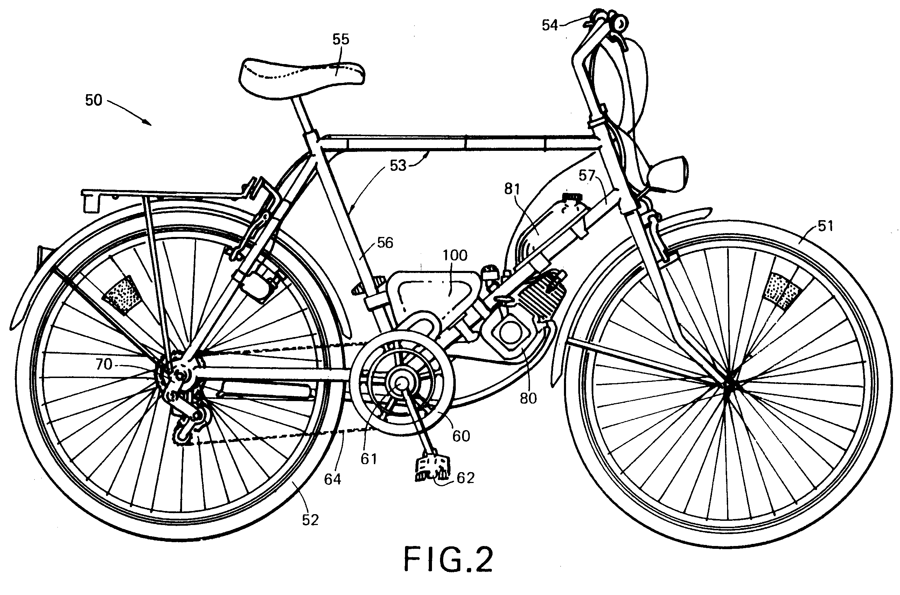

Figure 2 is a perspective view of a first embodiment of a bicycle having a power transmission according to the invention mounted thereon;
Figure 3 is a detailed and enlarged view of part of the bicycle of Figure 3 of the drawings;
Figure 4 is a plan view of the power transmission shown in use on the bicycle of Figure 2 of the drawings; and
Figure 5 is a plan view of a second embodiment of a bicycle of Figure 2 of the drawings.

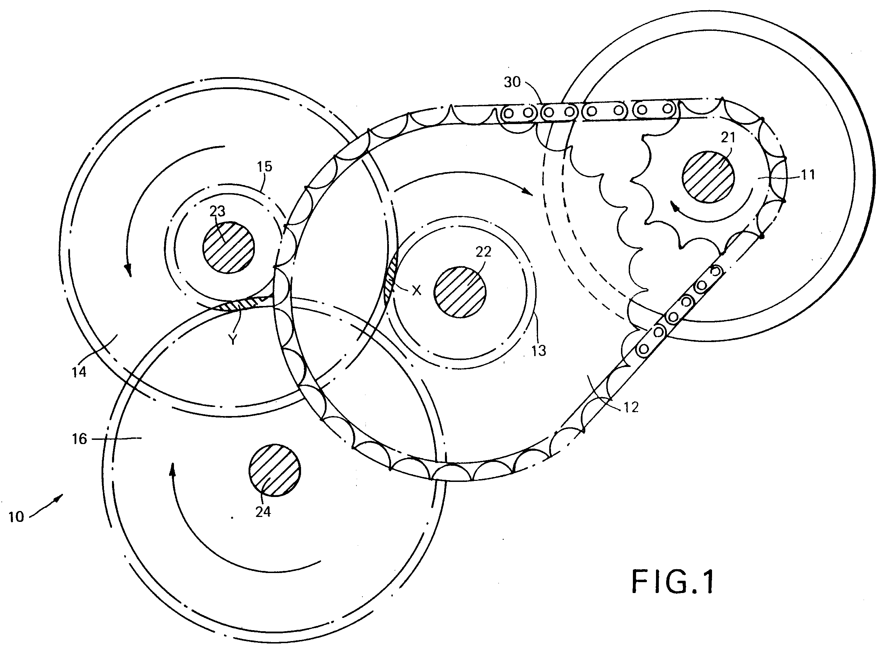

Referring now to the drawings and in particular to Figure 1 thereof, there is shown a gear train 10 being part of a power transmission according to the invention which gear train 10 comprises a first toothed wheel 11, a second toothed wheel 12, a third toothed wheel 13, a fourth toothed wheel 14, a fifth toothed wheel 15; and a sixth toothed wheel 16.

The first wheel 11 is mounted on a first shaft 21; the second and third wheels are coaxially mounted fast on a second shaft 22; the fourth and fifth wheels are coaxially mounted fast on a third shaft 23; and the sixth wheel is mountable on a fourth shaft 24.

The first wheel 11 has eleven teeth thereon; the second wheel 12 has twenty-eight teeth thereon; the third or pinion wheel 13 has thirty-five teeth thereon; the fourth wheel has eighty teeth thereon; the fifth or pinion wheel 15 has thirty teeth thereon; and the sixth wheel 16 has eighty teeth thereon.

The third and fourth wheels 13, 14 are in meshing engagement at x; the fifth and sixth wheels 15, 16 are in meshing engagement at y. The second wheel 12 supports a chain 30 which also engages with the first wheel 11.

The arrangement between the wheels 11-16 provides the following gear ratios viz: between the first and second wheels 11, 12, the gear ratio is 1:2.55; between the third and fourth wheels 13, 14, the gear ratio is 1:2.28; between the fifth and sixth wheels 15, 16, the gear ratio is 1:2.66.

The gear ratios referred to above enable the first shaft 21, which is rotatable by an engine 80 at a velocity between 314 and 628 rad/s (3,000 and 6,000 RPM), to produce an output on the fourth shaft 24 of about 27.1 rad/s (259 RPM) for the first shaft 21 rotating at about 419 rad/s (4,000 RPM) with a concomitant increase in torque.

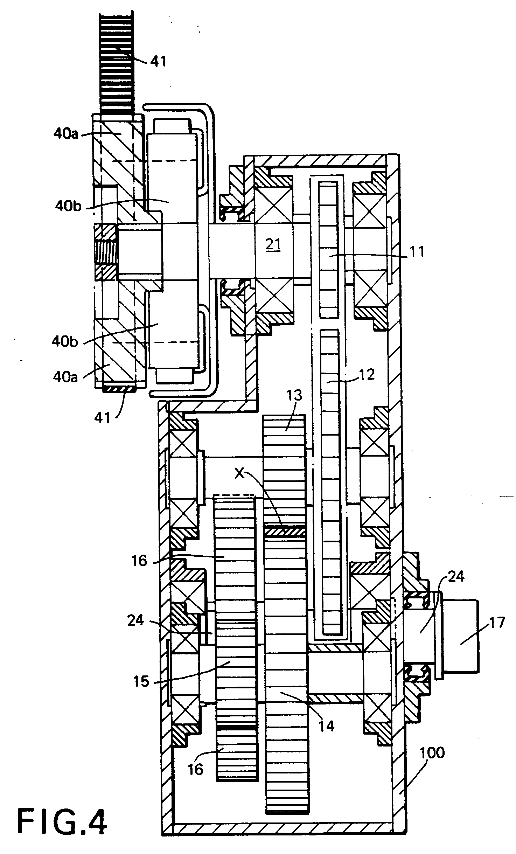

In Figure 4 of the drawings, there is shown a power transmission 200 according to the invention. The power transmission 200 comprises a clutch means in the form of a dry plate centrifugal plate clutch 40 having a clutch input side 40a and a clutch output side 40b; the gear train 10 and a freewheel 17. The output side 40b of the clutch 40 is connected to the first toothed wheel 11 or input side of the gear train 10 being mounted on the first shaft 21. The fourth shaft 24, being the output side of the gear train 10 has the freewheel 17 mounted thereon. The freewheel 17 has a seventh toothed wheel 17a comprising fourteen teeth thereon. The wheel 17a is not shown in Figure 4 of the drawings.

Mounted on the shaft 21 is the input side 40a of the centrifugal clutch 40. A belt 41 connects the input side 40a to a toothed pulley 42 mounted on a shaft 43. The shaft 43 is the output or drive shaft of the engine 80.

The gear train 10 is enclosed in housing 100 having suitable outlets for the shafts 21 and 24. The casing 100 has suitable seals for enabling the gear train to be encased in oil. The casing 100 is shaped with an external recess so as to accommodate the centrifugal clutch 40. This enables the first shaft 21 to coaxially accommodate the output side 40b of the clutch 40 and the first wheel 11.

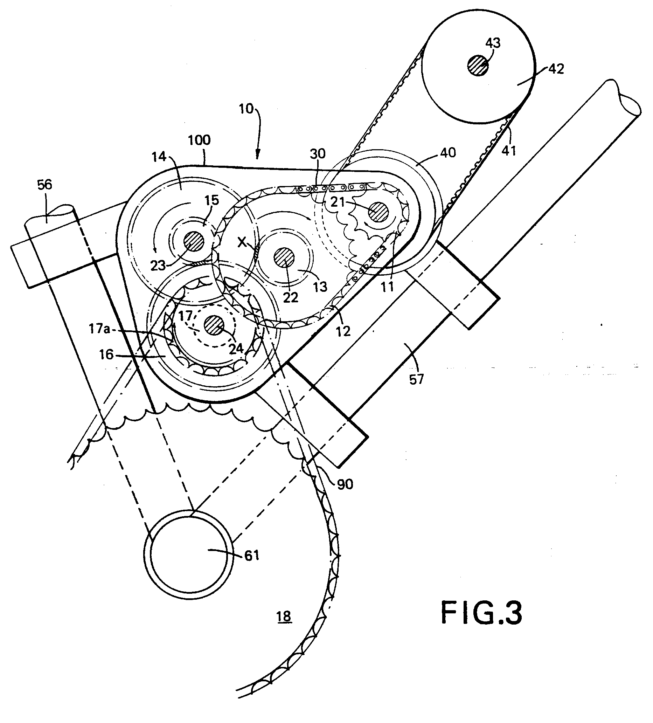

A bicycle 50 comprises a front wheel 51, a rear wheel 52, a frame 53, handle bars 54 and a saddle 55. Two bars 56, 57 of the frame 53 are shown in Fig. 3 of the drawings. The bicycle also includes a sprocket wheel 60 (having forth-two teeth thereon), a crankshaft 61, pedals 62 and a chain 64 linking the wheel 60 with, and serving to drive, the rear wheel 52 via a conventional rear sprocket and freewheel 70. The bicycle 50 is modified to accommodate the power transmission 200 according to the invention thereby enabling a relatively small petrol engine 80 having a tank 81 to power the bicycle 50.

In Figure 3 of the drawings, the wheels 11-16 of the gear train 10 are shown. For reasons of clarity, the wheel 60 has been omitted from Figure 3 of the drawings.

Mounted on the crankshaft 61 is a second sprocket wheel 18 having forty-two teeth thereon. A chain 90 connects the wheel 18 with the wheel 17a. The second sprocket wheel 18 also has freewheel capabilities. Thus, the wheels 18 and 60, being mounted coaxially on a common freewheel (not shown) which is mounted on the crankshaft 61, can rotate in unison. The wheel 18 is located as the innermost of the two wheels. With the crankshaft 61 in a non-rotating condition, and thus with the pedals 62 stationary, the wheels 18, 60 are free to rotate by virtue of the common freewheel. It will be observed that the wheel 18 is mounted nearer the frame 53 when compared with the location of the wheel 60.

In use, the bicycle 50 may be used in a conventional manner with the engine 80 inactive. Rotation of the pedals 62 will result in both wheels 18, 60 rotating. Power to the rear wheel 52 is transmitted via the chain 64 and the rear sprocket and freewheel 70. Power is also conveyed to the wheel 17a via the chain 90. However, because the wheel 17a is a freewheel (by virtue of the freewheel 17) relative to the fourth shaft 24, the fourth shaft 24 remains stationary. Thus power from the pedals 62 is not conveyed to the gear train 10 or the clutch 40 or the engine 80. Accordingly, with the engine 80 inactive, the bicycle 50 may be used in a conventional manner thus avoiding undue drag. By virtue of the rear sprocket and free wheel 70, when the pedals are stationary, the wheels 18, 60 together with the chain 64 and the chain 90 will also be stationary.

It will, of course, be appreciated that with this arrangement, the engine cannot be started by means of the pedals 62 or the rotation of the rear wheel 52 by virtue of the motion of the bicycle 50 downhill. In these circumstances, it is desirable that the engine 80 be of the type which can be started, for example, via a pull cord. A suitable engine 80 for this purpose would be 33 cc strimmer engine having a pull cord start facility. To provide for a compact and relatively narrow drive transmission, the centrifugal clutch of the strimmer engine is removed and the toothed pulley 42 is mounted coaxially with the flywheel on the shaft 43.

The centrifugal clutch of the strimmer motor may be incorporated into power transmission as the clutch 40.

With the engine 80 in operation at about 4000 RPM in respect of the wheel 42 which via the belt 41 drives the input side 40a of the centrifugal clutch 40, the output side 40b of the clutch 40 is engaged thereby driving the gear train 10 which ultimately drives the seventh wheel 17a, the wheels 18, 60, the chain 64 and ultimately the rearwheel 52 via the conventional rear sprocket and freewheel 70. The conventional rear sprocket and freewheel 70 may be used in a similar fashion as when used when driven by the pedals 62. Again, by virtue of the common freewheel the wheels 18, 60 will rotate but the crankshaft 61 and the pedals 62 will remain stationary.

The wheels 18, 60 will be rotating at about 87 RPM having regard to the fact that the gear ratio between the wheel 17a and the wheels 18, 60 is about 1:3.

If fitted, a derailleur or multi-speed hub may be utilized in a normal fashion with or without the engine 80 being in operation.

It will be appreciated that the gear train 10 may have other gear ratios. The following ranges of gear ratios have been found to be useful having regard to the compact nature and size of the gear train resulting in its usefulness as a gear train for use on a bicycle.

| Wheels | Ratio Range |
|---|---|
| 11 and 12 | 1 : 1.5 to 1 : 3.5 |
| 13 and 14 | 1 : 1.5 to 1 : 3.5 |
| 15 and 16 | 1 : 1.5 to 1 : 3.5 |
| 17 and 18, 60 | 1 : 2 to 1 : 4 |

Many bicycles have both wheels 18, 60 in position on the crankshaft 61 which wheels 18, 60 constitute part of the derailleur or multi-speed hub mechanism. By simply disengaging the wheel 18 from the derailleur mechanism and mounting wheels 18, 60 coaxially on the common freewheel of the crankshaft 61, no other alteration to that part of the bicycle is needed to convert it for use with the engine 80. Having regard to the compact nature of the power transmission 200 and the size of the engine 80, both of which can easily be accommodated on the frame of the bicycle as shown in the drawings, an extremely compact and useful power transmission transportation means is provided. Essentially, from a practical viewpoint, there are three main components viz the engine 80 linked via the belt 41 to a clutch 40/gear train 10 which is in turn is linked via the freewheel 17 and the chain 90 to the wheel 18. Thus, having mounted the engine 80 and the power transmission 200 on the frame of bicycle, the only linkages required and adjustments, if necessary, would be to the belt 41 and the chain 90.

There is thus provided an easy relatively inexpensive means of providing power to a conventional bicycle. The means for providing the power are easy to install and remove as described.

Furthermore, the bicycle uses a small capacity engine which can be easily started by pulling the pullcord while riding the bicycle. This means that it is not necessary to have drive connection from the pedals back up to the engine. The centrifugal clutch 40 can therefore be used to provide a drive from the engine to the bicycle as this is a one way clutch system. This avoids the necessity of having the manual clutch/belt tensioning device which Read uses. It also means that it is not necessary to block the centrifugal clutch on the engine output shaft as Read has found it necessary to do.

The invention also provides a freewheel 17 on the output side of the gear train 10. This means that if the engine 80 is not functioning and the bicycle is being pedalled, the cyclist experiences the minimum drag since he only has to cycle against the extra friction of the chain 90 linked to the wheel 17a. The cyclist does not experience the drag of a clutch system such as that provided by Read.

By using a smaller engine, there is avoided the problems of lack of comfort or convenience caused by the large size of engine which would require the cyclist to cycle with his knees far apart. The advantage of the freewheel 17 means that it one wishes to switch from the powered mode to the non-powered mode, it is only necessary to use the engine throttle control to reduce the engine speed sufficiently for the centrifugal clutch 40 to disengage. From this point onwards the bicycle automatically functions as a non-powered bicycle, because of the automatic disengagement of the drive by the freewheel 17. This is a feature not provided by Read who would have to manually disengage the clutch. Clearly if the engine should cease to function due to a fault, the bicycle of the present invention automatically reverts to a non-powered system whereas the Read cycle must be manually declutched.

A further advantage of the present invention is manner of mounting of the centrifugal clutch 40 on the first shaft 11 which has the advantage of reducing the width of the housing 100. By having a single gear train 200 as one integral unit which can be bolted to the engine, the power transmission is very easy to fit to the bicycle and equally easy to remove.

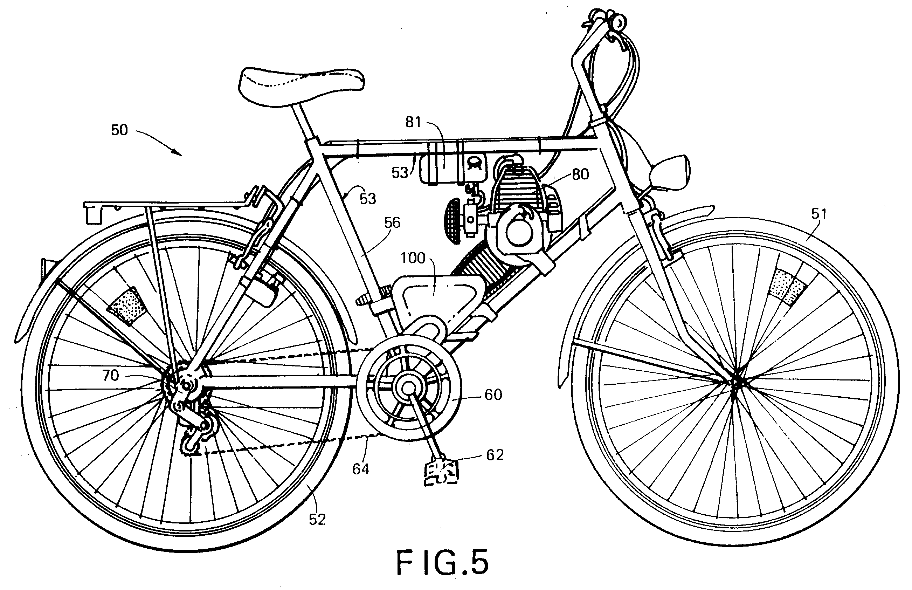

Fig. 5 shows the bicycle 50 having alternative positions for the mounting of the motor 80 and the tank 81.

The preferred embodiment of the present invention seeks to provide a power transmission which is easily fitted to a bicycle and easily removed, easily brought into operation and easily taken out of operation, and which when out of operation does not provide a significant increased frictional drag. A further aim of the preferred embodiment of the present invention is to provide a power transmission which when provided on a powered bicycle or tricycle provides an arrangement which is not cumbersome, and which can be easily ridden as a non-prime mover powered bicycle or tricycle.

The invention is not limited by or to the specific embodiments described which can undergo considerable variation without departing from the scope of the invention.

## Claims

1. A power transmission (200) for coupling a prime mover (80) having an output shaft (43) to an input side (18) of a vehicle (50) having a driven wheel and which is selectively pedal-powered, said vehicle (50) also having an output side, which power transmission (200) comprises a clutch means (40) having a clutch input side (40a) and a clutch output side (40b); a gear train (10) having a gear train input side (11) and a gear train output side (16); means for connecting the output shaft (43) to the clutch input side (40a); means for connecting the clutch output side (40b) to the gear train input side (11); means for connecting the gear train output side (16) to the input side (18) of the vehicle; characterised in that a first freewheel means (17,17a) is interposed between the gear train output side (16) and the input side (18) of the vehicle, so that there is unidirectional transmission of power from the prime mover (80) to the vehicle (50), the input side (18) of the vehicle comprises a pedal crankshaft (61) having a second freewheel means mounted thereon and a first (18) and a second (60) sprocket wheel mounted co-axially on the second freewheel means, and the output side of the first freewheel means (17,17a) is connectable to said second sprocket wheel (60) and the first sprocket wheel (18) is connectable to a wheel of the vehicle (50).

2. A power transmission (200) as claimed in claim 1 wherein the clutch means comprises a dry plate centrifugal clutch (40).

3. A power transmission (200) as claimed in claim 1 or claim 2 wherein the gear train (10) is mounted in a housing (100) providing an oilbath for the gear train (10).

4. A power transmission (200) as claimed in claim 3 wherein the housing (100) has a shape or configuration for accommodating externally thereof the clutch means (40).

5. A power transmission (200) as claimed in any of claims 1 to 4 wherein the clutch output side (40b) and the gear train input side (11) are mounted coaxially on a common shaft (21).

6. A power transmission (200) as claimed in any of claims 1 to 5 wherein the gear train (10) comprises a first toothed wheel (11) adapted for connection to the clutch output side (40b); a second toothed wheel (12) and a third toothed wheel (13) arranged coaxially and adapted for rotation in unison; a fourth and fifth toothed wheel (14,15) arranged coaxially and adapted for rotation in unison; and a sixth toothed wheel (16); and wherein said first wheel (11) is adapted to drive said second wheel (12); said third and fourth wheels (13,14) are adapted for meshing engagement with each other; said fifth and sixth wheels (15,16) are adapted for meshing engagement with each other; and said sixth wheel (16) is mounted on an output shaft (24) which constitutes the output side of the gear train (10); and wherein the gear ratio between the first and second wheels (11,12) is in the range 1:1.5 to 1:3.5; the gear ratio between the third and fourth wheels (13,14) is in the range 1:1.5 to 1:3.5; and the gear ratio between the fifth and sixth wheels (15,16) is in the range 1:1.5 to 1:3.5.

7. A power transmission (200) as claimed in claim 6 wherein the gear ratio between the first and second wheels (11,12) is 1:2.55; the gear ratio between the third and fourth wheels (13,14) is 1:2.28; and the gear ratio between the fifth and sixth wheels (15,16) is 1:2.66.

8. A power transmission (200) as claimed in claim 6 or claim 7 wherein for a prime mover (80) having an output of 419 rad/s (4000 RPM), the first freewheel means (17,17a) rotates at a velocity of 27.1 rad/s (259 RPM).

9. A power transmission (200) as claimed in any of claims 1 to 8 wherein the first freewheel means (17,17a) is mounted on the output side of the gear train (10).

10. A power transmission (200) as claimed in any of claims 1 to 9 in combination with a vehicle (50) which is a bicycle or a tricycle.

11. A power transmission (200) and vehicle (50) as claimed in claim 10 wherein said second sprocket wheel (60) constitutes the inner wheel of said sprocket wheels.

12. A power transmission (200) as claimed in any of claims 1 to 9 or power transmission (200) and vehicle (50) as claimed in claim 10 or 11, in combination with a prime mover (80) which comprises a strimmer engine assembly including a flywheel and a strimmer engine centrifugal clutch mounted on a flywheel shaft and wherein the engine assembly is modified by the removal of said strimmer engine centrifugal clutch; wherein said clutch means comprises said strimmer engine clutch, and said output shaft connecting means comprises a pulley and belt arrangement which pulley is mounted on the flywheel shaft.

13. A bicycle or tricycle (50) which comprises a frame (53) supporting a front wheel (51); a rear wheel (52); a crankshaft (61); a prime mover (80); and a power transmission (200) as claimed in any of claims 1 to 12 and wherein the rear wheel (52) is driveable via a chain (64) connected to the first sprocket wheel (18); said first sprocket wheel (18) being mounted coaxially with the second sprocket wheel (60) on a common freewheel mounted on the crankshaft (61) rotatable by pedals (62); the second sprocket wheel (60) being connected to the first freewheel means (17,17a) so that, in use, the prime mover (80) drives the rear wheel (52) of the bicycle or tricycle (50) via the gear train (10) and the first freewheel means (17,17a).

14. A power transmission (200) as claimed in claim 1 wherein the gear train (10) comprises a first toothed wheel (11); a second toothed wheel (12) and a third toothed wheel (13) arranged coaxially and adapted for rotation in unison; a fourth (14), fifth (15) and sixth toothed wheel (16); and wherein said first wheel (11) is adapted to be driven by the prime mover (80) and adapted to drive said second wheel (12); and said sixth wheel (16) is mounted on an output shaft (24) which constitutes the output side of gear train (10) and is connectable to the input side of the vehicle (50); characterised in that said fourth and fifth toothed wheels (14,15) are arranged coaxially and adapted for rotation in unison; said third and fourth (13,14) and fifth and sixth (15,16) wheels, respectively, being adapted for meshing engagement with each other, and in that the first freewheel means (17,17a) is mounted on the output shaft (24) for enabling unidirectional transmission of power from the prime mover (80) to the vehicle (50).

15. A power transmission (200) as claimed in claim 14 wherein the gear ratio between the first and second wheels (11,12) is in the range 1:1.5; to 1:3.5; the gear ratio between the third and fourth wheels (13,14) is in the range 1:1.5 to 1:3.5; the gear ratio between the fifth and sixth wheels (15,16) is in the range 1:1.5 to 1:3.5.

16. A power transmission (200) as claimed in claim 14 or claim 15 wherein the gear ratio between the first and second wheels (11,12) is 1:2.55; the gear ratio between the third and fourth wheels (13,14) is 1:2.28; and the gear ratio between the fifth and sixth wheels (15,16) is 1:2.66.

17. A power transmission (200) as claimed in any of claims 14 to 16 wherein for a prime mover (80) having an output of 419 rad/s (4000 RPM), the first freewheel means (17,17a) rotates at a velocity of 27.1 rad/s (259 RPM).

## Patentansprüche

1. Kraftübertragungsvorrichtung (200) zum Verkuppeln einer eine Abtriebswelle (43) aufweisende Antriebsmaschine (80) mit einer Antriebsseite (18) eines Fahrzeuges (50) mit einem angetriebenen Rad, das selektiv pedalbetrieben werden kann, wobei das genannte Fahrzeug (50) auch eine Abtriebsseite hat, wobei die Kraftübertragungsvorrichtung (200) folgendes umfaßt: eine Kupplung (40) mit einer Kupplungsantriebsseite (40a) und einer Kupplungsabtriebsseite (40b), einen Getriebezug (10) mit einer Getriebezug-Antriebsseite (11) und einer Getriebezug-Abtriebsseite (16), Mittel zum Verbinden der Abtriebswelle (43) mit der Kupplungsantriebsseite (40a), Mittel zum Verbinden der Kupplungsabtriebsseite (40b) mit der Getriebezug-Antriebsseite (11), Mittel zum Verbinden der Getriebezug-Abtriebseite (16) mit der Antriebsseite (18) des Fahrzeugs, dadurch gekennzeichnet, daß ein erster Freilauf (17, 17a) zwischen die Getriebezug-Abtriebsseite (16) und die Antriebsseite (18) des Fahrzeuges geschaltet ist, so daß eine unidirektionale Übertragung von Kraft von der Antriebsmaschine (80) zu dem Fahrzeug (50) gegeben ist, daß die Antriebsseite (18) des Fahrzeuges eine Tretkurbelwelle (61) mit einem zweiten Freilauf, der daran befestigt ist, und ein erstes (18) und ein zweites (60) Kettenrad aufweist, die koaxial auf dem zweiten Freilauf montiert sind, und daß die Abtriebsseite des ersten Freilaufs (17, 17a) mit dem genannten zweiten Kettenrad (60) und das erste Kettenrad (18) mit einem Rad des Fahrzeugs (50) verbunden werden kann.

2. Kraftübertragungsvorrichtung (200) nach Anspruch 1, wobei die Kupplung eine Trockenscheiben-Fliehkraftkupplung (40) aufweist.

3. Kraftübertragungsvorrichtung (200) nach Anspruch 1 oder Anspruch 2, wobei der Getriebezug (10) in einem Gehäuse (100) montiert ist, das ein Ölbad für den Getriebezug (10) bildet.

4. Kraftübertragungsvorrichtung (200) nach Anspruch 3, wobei das Gehäuse (100) eine Form oder Konfiguration aufweist, um an seiner Außenseite die Kupplung (40) aufzunehmen.

5. Kraftübertragungsvorrichtung (200) nach einem der Ansprüche 1 bis 4, wobei die Kupplungsabtriebsseite (40b) und die Getriebezug-Antriebsseite (11) koaxial auf einer gemeinsamen Welle (21) montiert sind.

6. Kraftübertragungsvorrichtung (200) nach einem der Ansprüche 1 bis 5, wobei der Getriebezug (10) folgendes umfaßt: ein erstes Zahnrad (11) für die Verbindung zur Kupplungs-Abtriebsseite (40b), ein zweites Zahnrad (12) und ein drittes Zahnrad (13), die koaxial angeordnet sind und sich im Einklang miteinander drehen, ein viertes und ein fünftes Zahnrad (14, 15), die koaxial angeordnet sind und sich im Einklang miteinander drehen, und ein sechstes Zahnrad (16), und wobei das genannte erste Rad (11) das genannte zweite Rad (12) antreibt, wobei das genannte dritte und das genannte vierte Rad (13, 14) ineinandergreifen, wobei das genannte fünfte und das genannte sechste Rad (15, 16) ineinandergreifen, und wobei das genannte sechste Rad (16) auf einer Abtriebswelle (24) montiert ist, die die Abtriebsseite des Getriebezuges (10) bildet, und wobei das Übersetzungsverhältnis zu dem ersten und dem zweiten Rad (11, 12) im Bereich zwischen 1 : 1,5 und 1 : 3,5 liegt, wobei das Übersetzungsverhältnis zu dem dritten und dem vierten Rad (13, 14) im Bereich zwischen 1 : 1,5 und 1 : 3,5 liegt, und wobei das Übersetzungsverhältnis zwischen dem fünften und dem sechsten Rad (15, 16) im Bereich zwischen 1 : 1,5 und 1 : 3,5 liegt.

7. Kraftübertragungsvorrichtung (200) nach Anspruch 6, wobei das Übersetzungsverhältnis zwischen dem ersten und dem zweiten Rad (11, 12) 1 : 2,55 beträgt, wobei das Übersetzungsverhältnis zwischen dem dritten und dem vierten Rad (13, 14) 1 : 2,28 beträgt und wobei das übersetzungsverhältnis zwischen dem fünften und dem sechsten Rad (15, 16) 1 : 2,66 beträgt.

8. Kraftübertragungsvorrichtung (200) nach Anspruch 6 oder Anspruch 7, wobei sich für eine Antriebsmaschine (80) mit einer Leistung von 419 rad/s (4000 U/min) der erste Freilauf (17, 17a) mit einer Geschwindigkeit von 27,1 rad/s (259 U/min) dreht.

9. Kraftübertragungsvorrichtung (200) nach einem der Ansprüche 1 bis 8, wobei der erste Freilauf (17, 17a) auf der Abtriebsseite des Getriebezuges (10) montiert ist.

10. Kraftübertragungsvorrichtung (200) nach einem der Ansprüche 1 bis 9 in Kombination mit einem Fahrzeug (50), das ein Zweirad oder ein Dreirad ist.

11. Kraftübertragungsvorrichtung (200) und Fahrzeug (50) nach Anspruch 10, wobei das genannte zweite Kettenrad (60) das Innenrad der genannten Kettenräder ist.

12. Kraftübertragungsvorrichtung (200) nach einem der Ansprüche 1 bis 9 oder Kraftübertragungsvorrichtung (200) und Fahrzeug (50) nach Anspruch 10 oder 11 in Kombination mit einer Antriebsmaschine (80), die folgendes umfaßt: einen Grastrimmermotor mit einem Schwungrad und einer Grastrimmermotor-Fliehkraftkupplung, die auf einer Schwungradwelle montiert ist, wobei der Motor durch Wegfall der genannten Grastrimmermotor-Fliehkraftkupplung modifiziert ist; wobei die genannte Kupplung die genannte Grastrimmermotorkupplung aufweist und wobei das genannte Abtriebswellen-Verbindungsmittel eine Scheiben- und Riemenanordnung aufweist, wobei die Riemenscheibe auf der Schwungradwelle montiert ist.

13. Zweirad oder Dreirad (50), das einen Rahmen (53) umfaßt, der folgendes trägt: ein Vorderrad (51), ein Hinterrad (52), eine Tretkurbelwelle (61), eine Antriebsmaschine (80) und eine Kraftübertragungsvorrichtung (200) nach einem der Ansprüche 1 bis 12, wobei das Hinterrad (52) über eine Kette (64) angetrieben werden kann, die mit dem ersten Kettenrad (18) verbunden ist, wobei das genannte erste Kettenrad (18) koaxial mit dem zweiten Kettenrad (60) auf einem gemeinsamen Freirad koaxial montiert ist, das auf der Tretkurbelwelle (61) montiert ist, die mit Pedalen (62) drehbar ist, wobei das zweite Kettenrad (60) mit dem ersten Freirad (17, 17a) verbunden ist, so daß bei Gebrauch die Antriebsmaschine (80) das Hinterrad (52) des Zweirades oder Dreirades (50) über den Getriebezug (10) und das erste Freirad (17, 17a) antreibt.

14. Kraftübertragungsvorrichtung (200) nach Anspruch 1, wobei der Getriebezug (10) folgendes umfaßt: ein erstes Zahnrad (11), ein zweites Zahnrad (12) und ein drittes Zahnrad (13), die koaxial angeordnet sind und sich im Einklang miteinander drehen, ein viertes (14), ein fünftes (15) und ein sechstes Zahnrad (16), wobei das genannte erste Rad (11) von der Antriebsmaschine (80) angetrieben wird und das zweite Rad (12) antreibt, wobei das genannte sechste Rad (16) auf einer Abtriebswelle (24) montiert ist, die die Abtriebsseite eines Getriebezuges (10) darstellt und mit der Antriebsseite des Fahrzeuges (50) verbunden werden kann, dadurch gekennzeichnet, daß das genannte vierte und fünfte Zahnrad (14, 15) koaxial angeordnet sind und sich im Einklang miteinander drehen, wobei das genannte dritte und vierte (13, 14) bzw. das fünfte und sechste (15, 16) Rad jeweils ineinandergreifen, und dadurch, daß das erste Freirad (17, 17a) auf der Abtriebswelle (24) montiert ist, um eine unidirektionale Übertragung von Kraft von der Antriebsmaschine (80) auf das Fahrzeug (50) zu ermöglichen.

15. Kraftübertragungsvorrichtung (200) nach Anspruch 14, wobei das Übersetzungsverhältnis zwischen dem ersten und dem zweiten Rad (11, 12) im Bereich zwischen 1 : 1,5 und 1 : 3,5 liegt, wobei das Übersetzungsverhältnis zu dem dritten und vierten Rad (13, 14) im Bereich zwischen 1 : 1,5 und 1 : 3,5 liegt, wobei das Übersetzungsverhältnis zwischen dem fünften und sechsten Rad (15, 16) im Bereich zwischen 1 : 1,5 und 1 : 3,5 liegt.

16. Kraftübertragungsvorrichtung (200) nach Anspruch 14 oder Anspruch 15, wobei das Übersetzungsverhältnis zwischen dem ersten und dem zweiten Rad (11, 12) 1 : 2,55 beträgt, wobei das Übersetzungsverhältnis zwischen dem dritten und vierten Rad (13, 14) 1 : 2,28 beträgt und wobei das Übersetzungsverhältnis zwischen dem fünften und dem sechsten Rad (15, 16) 1 : 2,66 beträgt.

17. Kraftübertragungsvorrichtung (200) nach einem der Ansprüche 14 bis 16, wobei sich für eine Antriebsmaschine (80) mit einer Leistung von 419 rad/s (4000 U/min) das erste Freirad (17, 17a) mit einer Geschwindigkeit von 27,1 Rad/S (259 U/min) dreht.

## Revendications

1. Transmission de force (200) pour l'accouplement d'une machine motrice (80) présentant un arbre de sortie (43) à un côté d'entrée (18) d'un véhicule (50) présentant une roue menée et qui est actionnée sélectivement par pédale, ledit véhicule (50) présentant également un côté de sortie, ladite transmission de force (200) comporte un moyen d'embrayage (40) présentant un côté d'entrée d'embrayage (40a) et un côté de sortie d'embrayage (40b); un train d'engrenages (10) présentant un côté d'entrée de train d'engrenages (11) et un côté de sortie de train d'engrenages (16); un moyen de relier l'arbre de sortie (43) au côté d'entrée d'embrayage (40a); un moyen de relier le côté de sortie d'embrayage (40b) au côté d'entrée de train d'engrenages (11); un moyen de relier le côté de sortie du train d'engrenages (16) au côté d'entrée (18) du véhicule; caractérisé en ce que un premier moyen de roue libre (17,17a) est interposé entre le côté de sortie de train d'engrenages (16) et le côté d'entrée (18) du véhicule, de manière à ce qu'il y ait une transmission unidirectionnelle de force depuis la machine motrice (80) jusqu'au véhicule (50), le côté d'entrée (18) du véhicule comporte un arbre coudé de pédalier (61) présentant un deuxième moyen de roue libre monté sur celui-ci et une première (18) et une deuxième (60) roues de grand pignon montées de façon coaxiale sur le deuxième moyen de roue libre, et le côté de sortie du premier moyen de roue libre (17,17a) est reliable à ladite deuxième roue de grand pignon (60) et la première roue de grand pignon (18) est reliable à une roue du véhicule (50).

2. Transmission de force (200) selon la revendication 1, dans laquelle le moyen d'embrayage comporte un embrayage centrifuge à plaque sèche (40).

3. Transmission de force (200) selon la revendication 1 ou la revendication 2, dans laquelle le train d'engrenages (10) est monté dans un logement (100) fournissant un bain d'huile pour le train d'engrenages (10).

4. Transmission de force (200) selon la revendication 3, dans laquelle le logement (100) a une certaine forme ou une configuration pour accommoder à l'extérieur de celui-ci le moyen d'embrayage (40).

5. Transmission de force (200) selon l'une quelconque des revendications 1 à 4, dans laquelle le côté de sortie d'embrayage (40b) et le côté d'entrée du train d'engrenages (11) sont montés de façon coaxiale sur un arbre commun (21).

6. Transmission de force (200) selon l'une quelconque des revendications 1 à 5, dans laquelle le train d'engrenages (10) comporte une première roue dentée (11) adaptée pour être reliée au côté de sortie d'embrayage (40b); une deuxième roue dentée (12) et une troisième roue dentée (13) placées de façon coaxiale et adaptées à une rotation à l'unisson; une quatrième et une cinquième roues dentées (14,15) placées de façon coaxiale et adaptées à une rotation à l'unisson; et une sixième roue dentée (16); et dans laquelle ladite première roue (11) est adaptée à mener ladite deuxième roue (12); lesdites troisième et quatrième roues (13,14) sont adaptées à un engrènement en prise l'une par rapport à l'autre; lesdites cinquième et sixième roues (15,16) sont adaptées à un engrènement en prise l'une par rapport à l'autre; et ladite sixième roue (16) est montée sur un arbre de sortie (24) qui constitue le côté de sortie du train d'engrenages (10); et dans laquelle le rapport d'engrenages entre la première et la deuxième roues (11,12) est de l'ordre de 1:1.5 à 1:3,5; le rapport d'engrenage entre la troisième et la quatrième roues (13,14) est de l'ordre de 1:1,5 à 1:3,5; et le rapport d'engrenage entre la cinquième et la sixième roues (15,16) est de l'ordre de 1:1,5 à 1:3,5.

7. Transmission de force (200) selon la revendication 6, dans laquelle le rapport d'engrenage entre la première et la deuxième roues (11,12) est de 1:2,55; le rapport d'engrenage entre la troisième et la quatrième roues (13,14) est de 1:2,28; et le rapport d'engrenage entre la cinquième et la sixième roues (15,16) est de 1:2,66.

8. Transmission de force (200) selon la revendication 6 ou la revendication 7, dans laquelle pour une machine motrice (80) présentant un débit de 419 rad/s (4000 tr/mn), le premier moyen de roue libre (17,17a) tourne à une vitesse de 27,1 rad/s (259 tr/mn).

9. Transmission de force (200) selon l'une quelconque des revendications 1 à 8, dans laquelle le premier moyen de roue libre (17,17a) est monté sur le côté de sortie du train d'engrenages (10).

10. Transmission de force (200), selon l'une quelconque des revendications 1 à 9, en conjonction avec un véhicule (50) qui est une bicyclette ou un tricycle.

11. Transmission de force (200) et un véhicule (50) selon la revendication 10, dans laquelle ladite deuxième roue de grand pignon (60) constitue la roue intérieure desdites roues à grand pignon.

12. Transmission de force (200) selon l'une quelconque des revendications 1 à 9, ou transmission de force (200) et véhicule (50) selon la revendication 10 ou 11, en conjonction avec une machine motrice (80) qui comporte un montage de moteur de désherbeuse* comprenant une roue volante et un embrayage centrifuge de moteur de désherbeuse monté sur un arbre de roue volante, et dans laquelle le montage de moteur est modifié par l'enlèvement dudit embrayage centrifuge de moteur de désherbés; dans laquelle ledit moyen d'embrayage comporte ledit embrayage du moteur de désherbés et ledit moyen de liaison de l'arbre de sortie comporte un dispositif de poulie et de courroie, la poule est montée sur l'arbre de roue volante.

13. Bicyclette ou tricycle (50) qui comporte un cadre (53) maintenant une roue avant (51); une roue arrière (52); un arbre coudé (61); une machine motrice (80); et une transmission de force (200) comme revendiqué dans l'une quelconque des revendications 1 à 12, et dans laquelle la roue arrière (52) est manoeuvrable par l'intermédiaire d'une chaîne (64) reliée à la première roue de grand pignon (18); ladite première roue de grand pignon (18) étant montée de façon coaxiale avec la deuxième roue de grand pignon (60) sur une roue libre commune montée sur l'arbre coudé (61) rotatif par des pédales (62); la deuxième roue de grand pignon (60) étant reliée au premier moyen de roue libre (17,17a), de sorte que lors de l'utilisation, la machine motrice (80) entraîne la roue arrière (52) de la bicyclette ou du tricycle (50) par l'intermédiaire du train d'engrenages (10) et du premier moyen de roue libre (17,17a).

14. Transmission de force (200) selon la revendication 1, dans laquelle le train d'engrenages (10) comporte une première roue dentée (11); une deuxième roue dentée (12) et une troisième roue dentée (13) placées de façon coaxiale et adaptées à un rotation à l'unisson; une quatrième (14), cinquième (15) et sixième (16) roues dentées; et dans laquelle la première roue (11) est adaptée à être menée par la machine motrice (80) et adaptée à mener ladite deuxième roue (12); et ladite sixième roue (16) est montée sur un arbre de sortie (24) qui constitue le côté de sortie du train d'engrenages (10) et est reliage au côté d'entrée du véhicule (50); caractérisée en ce que ledites quatrième et cinquième roues dentées (14,15) sont placées de façon coaxiale et adaptées à une rotation à l'unisson; ledites troisième et quatrième (13,14) et cinquième et sixième (15,16) roues respectivement, étant adaptées pour un engrènement en prise les uns par rapport aux autres, et en ce que le premier moyen de roue libre (17,17a) est monté sur l'arbre de sortie (24) pour permettre une transmission unidirectionnelle de force de la machine motrice (80) au véhicule (50).

15. Transmission de force (200) selon la revendication 14, dans laquelle le rapport d'engrenage entre la première et la deuxième roues (11,12) est de l'ordre de 1:1,5; à 1:3,5; le rapport d'engrenage entre la troisième et la quatrième roues (13,14) est de l'ordre de 1:1,5 à 1:3,5; le rapport d'engrenage entre la cinquième et sixième roues (15,16) est de l'ordre de 1:1,5 à 1:3,5.

16. Transmission de force (200) selon la revendication 14 ou 15, dans laquelle le rapport d'engrenage entre la première et la deuxième roues (11,12) est de 1:2,55; le rapport d'engrenage entre la troisième et la quatrième roues (13,14) est de 1:2,28; et le rapport d'engrenage entre la cinquième et la sixième roues (15,16) est de 1:2,66.

17. Transmission de force (200) selon l'une quelconque des revendications 14 à 16, dans laquelle dans le cas d'une machine motrice (80) présentant un débit de 419 rad/s (4000 tr/mn), le premier moyen de roue libre (17,17a) tourne à une vitesse de 27,1 rad/s (259 tr/mn).
